# EUROPEAN PATENT APPLICATION

(11) **EP 2 985 945 A1**
(43) Date of publication of application: **17.02.2016**
(21) Application number: 14181172.9
(22) Date of filing: 15.08.2014
(51) Int. Cl.: H04L 9/08, H04L 12/58, H04L 29/06

(54) **Method for secure e-mail exchange**

(71) Applicant: CompuGroup Medical AG, 56070 Koblenz (DE)
(72) Inventor: Ockenfels, Jan Marc, 56154 Boppard Buchholz (DE)
(74) Representative: Richardt Patentanwälte PartG mbB

(57) **Abstract**

The invention relates to a secure telecommunication method for communicating information in an e-mail between a telecommunication device of a first user and a telecommunication device of a second user. The method comprises the steps of:
• Determining by the first user whether a public key of a first asymmetric key pair for encrypted e-mail exchange is assigned to the second user,
• In response to determining, that no public key is assigned to the second user, creating a first dataset by encrypting the information by the telecommunication device of the first user using a symmetric key,
• Transferring the first dataset to the second user using the e-mail, and storing the first dataset with the telecommunication device of the second user,
• In response to receiving the first dataset by the telecommunication device of the second user, creating the first asymmetric key pair comprising the public key and a private key,
• Providing the public key of the first asymmetric key pair to a telecommunication device of the first user,
• Creating a second dataset by encrypting the symmetric key by a telecommunication device of the first user using the public key of the first asymmetric key pair,
• Transferring the second dataset to the second user,
• Decrypting the second dataset using the private key of the first asymmetric key pair by the telecommunication device of the second user, the decryption resulting in the symmetric key, and
• Retrieving the first dataset and decrypting the first dataset using the symmetric key by the telecommunication device of the second user.

## Description

### Field of the invention

The present invention relates to the field of secure telecommunication methods for communicating information in an e-mail.

### Background and related art

Currently a number of methods for secure e-mail exchange are known in the art. Many of these telecommunication methods employ asymmetric cryptography principles like for example the PGP system. Such asymmetric cryptography systems employ a key pair comprising a public key for encrypting the information to be transferred and a private key used for decrypting the encrypted information. Using such an asymmetric cryptography scheme has the advantage that for secure transfer of for example an e-mail from user A to user B, the user B only has to provide his public key to user A while user B will keep his private key to himself.

It is an objective of the invention to provide for an improved telecommunication method for secure e-mail exchange as described by the claims and the following description.

### Summary

The invention provides a telecommunication method. Embodiments of the telecommunication method are given in the dependent claims.

The invention provides a secure telecommunication method for communicating information in an e-mail between a telecommunication device of a first user and a telecommunication device of a second user. In this context a telecommunication device may comprise at least one of a sensor, mobile phone, measuring device, smartphone, PDA, a laptop, a smart TV and/or any device able to telecommunicate data through a network. Herein the term "network" may comprise an internet of things system, a machine to machine telecommunication system, a Nearfield telecommunication system like a Blue-tooth or WiFi system, a Wireless Mesh Networks system, an ad-hoc network system, a satellite telecommunication system and/or a digital wireless telecommunication system such as LTE, GSM etc.

In a first method step the first user determines whether a public key of a first asymmetric key pair for encrypted e-mail exchange is assigned to the second user. To this end the first user may for example query a public key server or directly address the second user to provide his public key. If it is determined that the second user does provide a public key an e-mail exchange using asymmetric cryptography can be carried out as known in the art.

However, if the first user determines that no public key is assigned to the second user a first dataset is created by the telecommunication device of the first user. Herein the first dataset comprises the information to be transferred to the second user encrypted using a symmetric key. Once the first dataset has been created by the telecommunication device of the first user, the first dataset is transferred to the second user via e-mail wherein the telecommunication device of the second user upon receiving the first dataset stores the first dataset in a local storage area of the telecommunication device.

Once the first dataset has been received by the telecommunication device of the second user, the first asymmetric key pair comprising the public key and the private key assigned to the second user is created. The public key of the first asymmetric key pair is then provided to the telecommunication device of the first user for example by responding to the e-mail received previously from the first user, wherein the public key is attached to the e-mail transferred to the first user.

Once the telecommunication device of the first user received the public key assigned to the second user, the telecommunication of the first user creates a second dataset by encrypting the symmetric key previously used for creating the first dataset using the public key of the first asymmetric key pair received from the second user. This second dataset is then transferred to the second user for example via e-mail. Once the second dataset has been received at the telecommunication device of the second user the second dataset is decrypted using the private key assigned to the second user, the decryption resulting in symmetric key previously used to create the first dataset.

The telecommunication device of the second user then retrieves the first dataset from its local storage and decrypts the first dataset using the symmetric key obtained by decrypting the second dataset in order to obtain the information comprised in the e-mail.

Herein the e-mail may comprise both text information and further enclosures like images or other data.

Embodiments of the invention may have the advantage that the information to be communicated can be transferred using the first dataset to the second user no matter if the second user already has an assigned asymmetric key pair or not. The second user may then store the first dataset until he decides to decrypt and read the information contained in the first dataset. To this end the second user only has to obtain an asymmetric key pair and share the public key of the asymmetric key pair with the first user who initially sent the first dataset to the second user. The first user can then transfer the symmetric key necessary to decrypt the first dataset to the second user using standard asymmetric cryptography schemes. However, the first user does not have to wait with sending the information to the second user until the second user is prepared for exchanging information using asymmetric cryptography schemes.

In some embodiments the symmetric key used for creating the first dataset is a random key which may further increase the security of the telecommunication method described above.

In some embodiments the second dataset is transferred to the second user via e-mail using the same e-mail address previously used for transferring the first dataset to the second user. This may ensure that both the information to be communicated and the symmetric key necessary for decrypting the first dataset are transferred to the same person.

In some embodiments the e-mail used for transferring the first dataset further comprises a pointer in plain text. This pointer indicates that the second user requires an asymmetric key pair in order to read the information encrypted in the first dataset. Further the pointer comprises a web address of a management entity combined with an invitation to register with the management entity.

In some embodiments the management entity which is addressed when following the web address comprised in the pointer of the e-mail comprises a storage medium. In response to determining that no public key is assigned to the second user the secure telecommunication method then further comprises that the management entity receives a first identifier of the second user from the first user via the telecommunication device of the first user. An identifier in this case may for example be the e-mail address of a user, general personal data like birth date, name, home address or social security number. Once the second user received the e-mail comprising the first dataset and the pointer, the second user may follow the pointer and thus submit a registration request to the management entity. Therefore the secure telecommunication method further comprises the receiving of this registration request at the management entity, wherein the registration request comprises a second identifier of the second user. In order to verify that the second user currently trying to register with the management entity actually is the second user the first user intended to address with the first dataset, the management entity then compares the first identifier of the second user received from the first user with the second identifier of the second user received from the second user. Only if the first identifier of the second user matches the second identifier of the second user the management entity proceeds by determining the public key of the second user and forwarding the public key of the second user to the first user. The public key of the second user may for example be determined by querying a public key server or by querying the second user to provide his public key. Further the management entity upon determining the public key of the second user stores the public key assigned to the second user in the storage medium of the management entity wherein the public key is associated with the identifier of the second user.

This may have the advantage that the management entity is operable to verify the second user's identity thereby preventing a potential eavesdropper from disguising as the second user.

It has to be noted that telecommunication device the first user uses to transfer an identifier of the second user to the management entity is not necessarily the same telecommunication device previously used to transfer the first dataset via e-mail. In general the first and the second user may use a plurality of different devices when practicing the method described herein. For example the first user may use a first telecommunication device to transmit the first dataset to the second user, a second telecommunication device to transmit an identifier of the second user to the management entity and a third telecommunication device to transfer the second dataset to the second user.

In some embodiments the identifier of the second user comprises the e-mail address of the second user, to which the e-mail comprising the first dataset has been sent. This may facilitate the determining whether a user to be addressed via e-mail is already registered with the management entity: In order to find an entry corresponding to the user to be addressed stored in a user table comprised in the storage medium of the management entity, the management only requires the e-mail address of the user to be addressed. However this e-mail address is in the case of a transfer of the first dataset via e-mail known either way.

In some embodiments the first user queries the management entity to provide the public key of the second user in order to determine whether a public key is assigned to the second user. In response to receiving such a query to provide the public key of the second user the management entity then determines whether the public key of the second user is stored in the storage medium. If the management entity determines that the public key of the second user is in fact stored in the storage medium the management entity retrieves the public key of the second user from the storage medium and forwards the public key of the second user to the first user.

This may have the advantage that in order to communicate information to the second user using an asymmetric cryptography system the first user obtains the public key of the user to be addressed only from the management entity. Further the public key of the second user will only be stored in the management entity, if the second user has previously been invited to register with the management entity, wherein in course of the registration process the identity of the second user has been verified. Thus it can be avoided that an eavesdropper provides a fake public key to the first user which is disguised as a public key assigned to the second user. The inviting of users to register with a management entity and the exclusive querying by the management entity for public keys in the end establishes a web of trust, as only invited users will be registered with and authenticated by the management entity.

In some embodiments upon receiving a request to provide the public key of the second user from the first user, the management entity further requests the first user to provide an identifier of the first user. Once such an identifier of the first user has been received at the management entity the management entity determines whether the identifier of the first user is stored in the storage medium of the management entity. If the management entity determines that the identifier of the first user is in fact stored in the storage medium the management entity provides the first user with the public key of the second user. However, if the management entity determines that the identifier of the first user is not stored in the storage medium the management entity rejects the request of the first user. If the management entity determined that the identifier of the first user is stored in the storage medium the management entity may further demand the first user to provide a password or other credentials in order to verify that the first user is authorized to communicate information to the second user.

This may have the advantage that only users which are registered with and authenticated by the management entity may participate in a communication employing the secure telecommunication method described herein.

In some embodiments a second asymmetric key pair is assigned to the first user. In accordance with the embodiment the first user uses the private key of the second asymmetric key pair to sign the second dataset using his telecommunication device. The telecommunication device of the second user in response to receiving the second dataset then verifies the signature of the second dataset using the public key of the second asymmetric key pair. To this end the telecommunication device of the second user may for example either query a public key server, or query the management entity to provide the public key of the first user. When querying the management entity the second user may for example transmit the e-mail address of the first user from which the e-mail comprising the second dataset or the e-mail address from which the e-mail comprising the first dataset has been received to the management entity in order to identify the first user. Only if the telecommunication device of the second user is able to verify the signature of the first user, the second dataset is accepted. Otherwise the telecommunication device of the second user rejects the second dataset.

This may have the advantage, that the security of the telecommunication method is increased, as the second user may now verify whether the second dataset has in fact been provided by the first user. Further by querying the management entity for the public key of the first user, an eavesdropper can be prevented from providing a fake public key disguised as the public key of the first user.

In some embodiments the storage medium of the management entity comprises storage areas, each storage area being assigned to an individual user. To this end each storage area is associated with a public key of the assigned user and/or an identifier of the assigned user and/or an identifier of a user invited to register with the management entity. In response to creating the first dataset by the telecommunication device of the first user, the telecommunication device of the first user may then encrypt the symmetric key using the public key of the second asymmetric key pair and transmit the encrypted symmetric key to the management entity. The management entity upon receiving the encrypted key from the telecommunication device of the first user then stores the encrypted asymmetric key in the storage area assigned to the first user.

In some embodiments the reception of the public key of the second user by a telecommunication device of the first user automatically triggers the telecommunication device of the first user to retrieve the encrypted symmetric key from the management entity. The telecommunication device of the first user upon retrieving the encrypted symmetric key from the management entity then decrypts the retrieved encrypted symmetric key using the private key of the second asymmetric key pair, and creates the second dataset by encrypting the symmetric key using the public key of the first asymmetric key pair. The second dataset is then forwarded by the telecommunication device of the first user to the telecommunication device of the second user.

This may have the advantage that the first user does not necessarily have to transmit the e-mail comprising the second dataset using the same telecommunication device used for transmitting the first dataset. If the first user in fact uses two different telecommunication devices for transferring the first dataset and transferring the second dataset, the user has to store his private key on both telecommunication devices. As a result both telecommunication devices are operable to create the second dataset and transfer the second dataset to the second user, thereby enabling the second user to decrypt and read the contents of the first dataset.

### Brief description of the drawings

In the following, embodiments of the invention are explained in greater detail by way of example only making reference to the drawings in which:
- Fig. 1: is a block diagram of a telecommunication framework for practicing the telecommunication method,
- Fig. 2: is a flow diagram being illustrative of an embodiment of the secure telecommunication method, and
- Fig. 3: is a flow diagram of the registration process comprised in the secure telecommunication method.

### Detailed description

Throughout the following detailed description like elements of the various embodiments are designated by identical reference numerals.

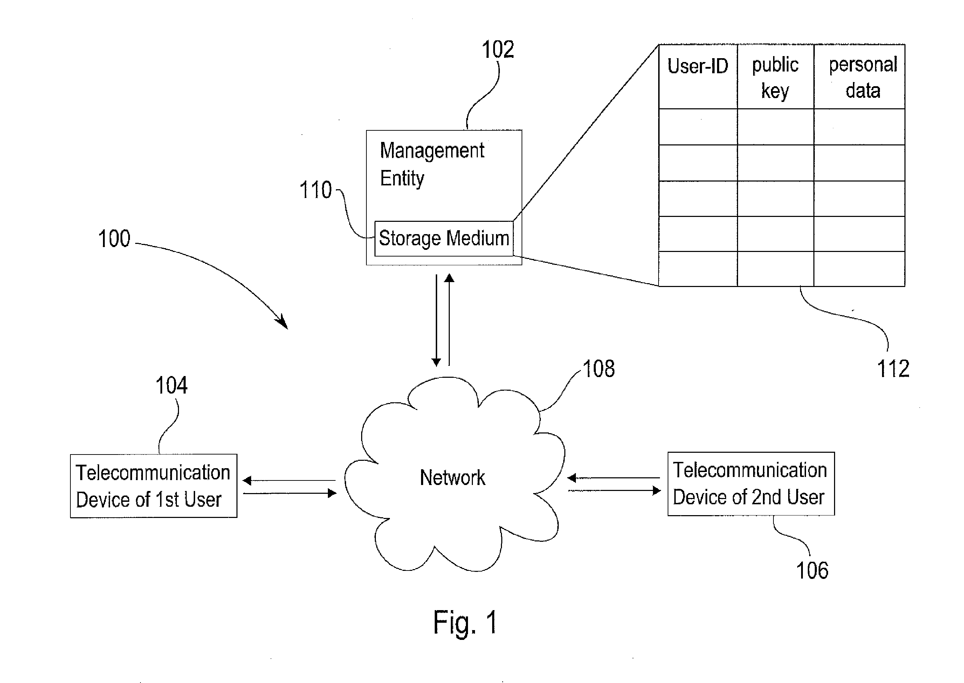

Fig. 1 shows a telecommunication system 100 comprising a management entity 102 which is connected to the telecommunication device of a first user 104 and to the telecommunication device of a second user 106 via a network 108. The network 108 may be any kind of local or wide area network and may be wireless and/or wire-based like the internet or a cellular telecommunications network.

The telecommunication devices 104 and 106 may for example be mobile phones or smartphones, tablet PCs or general personal computers or any other device capable of communicating information via a network. The management entity 102 may for example by a server computer system or may also be embodied as a distributed system in terms of cloud computing.

The management entity 102 comprises a storage medium 110. The storage medium 110 comprises a table 112 for storing the user IDs of users which are registered with the management entity as well as public keys and further personal data of the users the user IDs are assigned to.

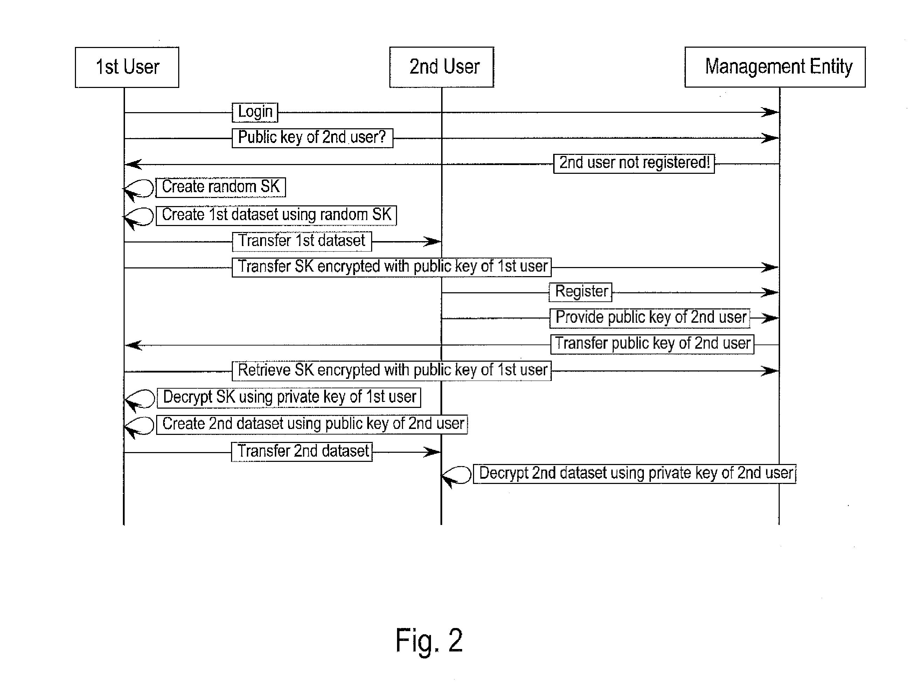

The way the telecommunication system depicted in Fig. 1 interacts in order to practice an embodiment of the invention is described with reference to Fig. 2.

Fig. 2 is a flow diagram illustrating the individual steps carried out when practicing the secure telecommunication method described herein. The telecommunication method depicted in Fig. 2 involves a first user, a second user and a management entity 102. The first user may use the telecommunication device 104 depicted in Fig. 1 to communicate via network 108 with the telecommunication device of the second user 106 depicted in Fig. 1 and with the management entity 102 depicted in Fig. 1. Accordingly the second user may use the telecommunication device 106 depicted in Fig. 1 for communication with the management entity 102 and the telecommunication device of the first user 04 via network 108.

If the first user intends to communicate confidential information to the second user using the telecommunication method of the present invention the first user would first have to call the communication service provided by the management entity 102. To this end the first user would have to login with management entity 102 for example by providing a username and a password which is then verified by the management entity 102 by searching the storage medium 110 for a corresponding entry. The first user may then query the management entity 102 whether a public key assigned to the second user the first user intends to address is known. The management entity 102 may then browse its user table 112 to determine if the second user is already registered with the management entity 102. To identify the second user the first user may for example transmit the e-mail address of the second user to the management entity 102. As such an e-mail address is unique it can be used as a user identifier and thus can be stored in the user table 112.

If the management entity 102 determines that the second user is registered with the management entity 102, the management entity 102 will retrieve the public key from the user table 112 and transfer the public key of the second user to the telecommunication device 104 of the first user via network 108, for example via e-mail. The first user may then transfer the information to the telecommunication device 106 of the second user using an asymmetric cryptography scheme.

However, if the management entity 102 determines that the second user is not yet registered or did not provide a public key, the management entity 102 returns the information that the second user is not registered yet and thus no public key of the second user can be provided to the telecommunication device 104 of the first user. The first user in response to receiving the notification that the second user is not registered may then create a random symmetric key and create a first dataset by using the random symmetric key to encrypt the information to be transferred to the second user. This first dataset is then transferred from the telecommunication device 104 of the first user to the telecommunication device 106 of the second user via e-mail using the e-mail address of the second user. Further, the first user encrypts the symmetric key using the public key assigned to the first user and transfers the encrypted symmetric key to the management entity 102. The management entity 102 upon receiving the encrypted symmetric key from the first user stores the encrypted symmetric key in the storage medium 110 for example in a storage area assigned to the first user.

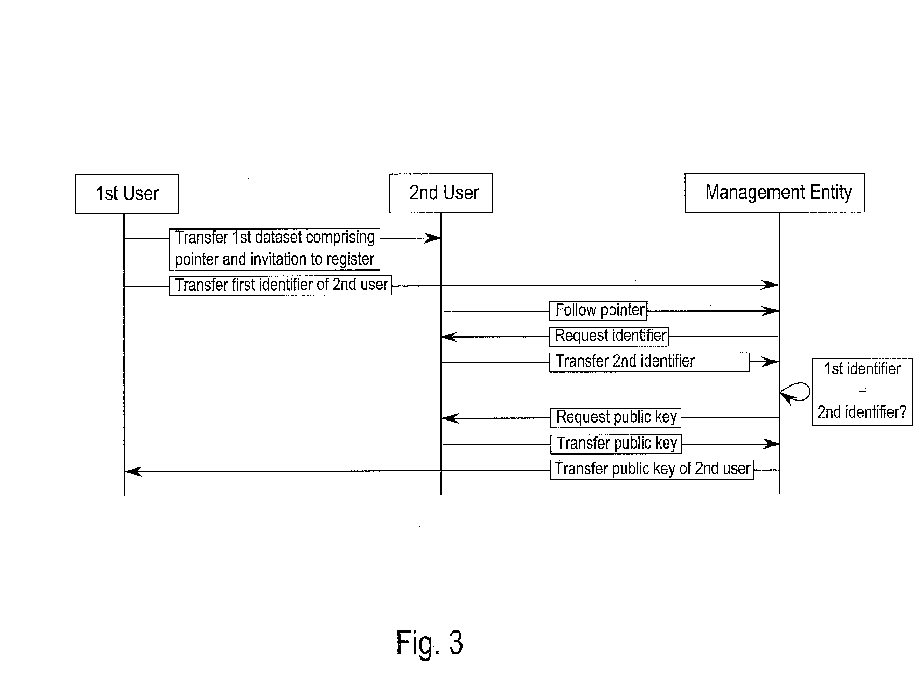

The first dataset transmitted to the telecommunication device of the second user comprises a pointer directing to the management entity 102 in combination with the information that the second user needs to register with the management entity 102 in order to decrypt and access the information comprised in the first dataset. When receiving the e-mail comprising the first dataset and the pointer the second user will follow the pointer and thus will address the management entity in order to register with the management entity. This registration process will be described later on with reference to Fig. 3.

Once the second user has successfully registered with the management entity 102 the second user provides the public key assigned to the second user to the management entity 102. If the second user until being addressed by the first user does not possess an asymmetric key pair the second user may create a new asymmetric key pair by himself. If the second user already is in possession of an asymmetric key pair and the public key assigned to the second user is stored in a public key infrastructure the second user in order to provide the public key of the second user to the management entity 102 may also send a notification to the management entity 102 redirecting the request of the management entity 102 for the public key of the second user to the public key infrastructure. In this case the management entity 102 may determine the public key of the second user by itself.

Once the management entity 102 received the public key of the second user the management entity 102 will store the public key in the user table 112 wherein the public key is assigned to the user identifier of the second user such that the public key can later on be retrieved by searching the user table for the user ID of the second user. Besides the public key and the user ID of the second user, the management entity 102 may also store further personal data of the second user in the user table like for example the name of the second user, the home address, the birth date or other data identifying the second user. Such personal data may for example be used to create a user profile.

The management entity 102 may then transfer the public key of the second user to the telecommunication device 104 of the first user for example via e-mail. The reception of the public key of the second user by the telecommunication device 104 of the first user may then automatically trigger the telecommunication device 104 of the first user to retrieve the encrypted symmetric key from the management entity 102. Once the encrypted symmetric key has been retrieved the first user may decrypt the symmetric key using the private key of the asymmetric key pair assigned to the first user. The first user may then create a second dataset by encrypting the symmetric key used to create the first dataset using the public key of the second user. This second dataset is then transferred to the telecommunication device 106 of the second user by the first user again via e-mail using the e-mail address of the second user. The second user may then decrypt the second dataset using the private key of the asymmetric key pair assigned to the second user. This decryption of the second dataset will then result in the symmetric key such that the second user can decrypt the first dataset using the previously obtained symmetric key and access the information comprised in the first dataset.

To further increase the security of the described telecommunication method, the telecommunication device 104 of the first user may further sign the second dataset before sending the second dataset to the telecommunication device 106 of the second user using the private key of the asymmetric key pair assigned to the first user. Upon receiving the second dataset from the telecommunication device 104 of the first user, the telecommunication device 106 of the second user may then query the management entity 102 to provide the public key of the asymmetric key pair assigned to the first user. Once the public key of the asymmetric key pair assigned to the first user has been received at the telecommunication device 106 of the second user, the telecommunication device 106 of the second user may then check whether the second dataset has been manipulated by an eavesdropper while being transferred to the telecommunication device 106 of the second user by verifying the signature of the first user. The telecommunication device 106 of the second user may then be programmed such that only datasets with correct signatures are accepted, while datasets whose signature cannot be verified are rejected. In addition to rejecting a dataset with an incorrect signature, the telecommunication device 106 of the second user may further be adapted to forward a failure message to the telecommunication device 104 of the first user, such that the transfer of the second dataset may be repeated until a dataset with a correct signature has been received by the telecommunication device 106 of the second user.

Fig. 3 is a flow diagram of the registration process previously mentioned with reference to Fig. 2. As described above the first dataset transferred to the second user by the first user comprises a pointer as well as an invitation to register with the management entity. Before or after transferring the first dataset to the second user the first user will also transfer a first identifier of the second user to the management entity 102. This is done to inform the management entity 102 that the second user is about to register in order to access the information comprised in the first dataset. The first identifier of the second user transferred to the management entity 102 by the first user may for example be the second user's e-mail address. The first user may also transfer further personal data of the second user to the management entity 102 such that the second user, when registering with the management entity 102, can be identified properly.

Upon receiving the first dataset comprising the pointer and the invitation to register the second user will follow the pointer. For example the pointer comprised in the first dataset may be a hyperlink redirecting the second user to the web address of the management entity 102. When being addressed by the second user the management entity 102 will then request an identifier from the second user. If for example the first user transmitted the e-mail address of the second user to the management entity 102 for an identifier of the second user, the management entity 102 will request the second user to provide its e-mail address. The second user will then transfer the demanded identifier, which will be called the second identifier of the second user, to the management entity 102. The management entity 102 then verifies if the first identifier of the second user received from the first user is identical with the second identifier of the second user received from the second user. Only if this is the case the management entity 102 will accept the registration request of the second user. Further, the management entity 102 may also request further personal data from the second user in order to set up a user profile of the second user.

Upon successful registration of the second user with the management entity 102 the management entity 102 will request the second user to provide its public key. The second user will then provide the public key of the asymmetric key pair assigned to the second user to the management entity 102 which will then store the public key of the second user in its user table 112. In a last step of the registration process the public key of the second user is transferred to the first user and the telecommunication method proceeds as described with reference to Fig. 2.

### List of reference numerals

- 100: telecommunication system
- 102: management entity
- 104: telecommunication device of first user
- 106: telecommunication device of second user
- 108: network
- 110: storage medium
- 112: user table

## Claims

1. A secure telecommunication method for communicating information in an e-mail between a telecommunication device of a first user (104) and a telecommunication device of a second user (106), the method comprising:
• Determining by the first user whether a public key of a first asymmetric key pair for encrypted e-mail exchange is assigned to the second user,
• In response to determining, that no public key is assigned to the second user, creating a first dataset by encrypting the information by the telecommunication device of the first user (104) using a symmetric key,
• Transferring the first dataset to the second user using the e-mail, and storing the first dataset with the telecommunication device of the second user (106),
• In response to receiving the first dataset by the telecommunication device of the second user (106), creating the first asymmetric key pair comprising the public key and a private key,
• Providing the public key of the first asymmetric key pair to a telecommunication device of the first user (104),
• Creating a second dataset by encrypting the symmetric key by a telecommunication device of the first user (104) using the public key of the first asymmetric key pair,
• Transferring the second dataset to the second user,
• Decrypting the second dataset using the private key of the first asymmetric key pair by the telecommunication device of the second user (106), the decryption resulting in the symmetric key,
• Retrieving the first dataset and decrypting the first dataset using the symmetric key by the telecommunication device of the second user (106).

2. The telecommunication method of claim 1, wherein the symmetric key is a random key.

3. The telecommunication method of claim 1 or 2, wherein the second dataset is transferred to the second user via e-mail using the same e-mail address previously used for transferring the first dataset to the second user.

4. The telecommunication method of any of the preceding claims, wherein the e-mail used for transferring the first dataset further comprises a pointer in plain text, the pointer indicating that the second user requires an asymmetric key pair in order to read the information encrypted in the first dataset, the pointer comprising a web-address of a management entity (102) the e-mail further comprising an invitation to register with the management entity (102).

5. The telecommunication method of claim 4, wherein the management entity (102) comprises a storage medium (110), wherein in response to determining that no public key is assigned to the second user, the method further comprises at the management entity (102):
• Receiving a first identifier of the second user from the first user,
• Receiving a registration request from the second user, the registration request comprising a second identifier of the second user,
• Comparing the first identifier of the second user received from the first user with the second identifier of the second user received from the second user,
• In response to determining that the first identifier of the second user received from the first user is identical with the second identifier of the second user received from the second user, determining the public key of the second user, forwarding the public key of the second user to the first user and storing the public key associated with the identifier of the second user in the storage medium (110).

6. The telecommunication method of claim 5, wherein the identifier of the second user comprises the e-mail address of the second user the e-mail comprising the first dataset has been sent to.

7. The telecommunication method of claim 5 or 6, wherein, in order to determine whether a public key is assigned to the second user, the first user queries the management entity (102) to provide the public key of the second user, wherein in response to receiving a query to provide the public key of the second user, the management entity (102) determines whether the public key of the second user is stored in the storage medium (110) and if the public key of the second user is stored in the storage medium (110), retrieves the public key of the second user from the storage medium (110)and forwards the public key of the second user to the first user.

8. The telecommunication method of claim 7, wherein upon receiving a request to provide the public key of the second user from the first user, the method further comprises at the management entity (102):
• Requesting the first user to provide an identifier,
• In response to receiving the identifier from the first user, determining whether the identifier of the first user is stored in the storage medium (110),
• In response to determining that the identifier is stored in the storage medium (110) providing the first user with the public key of the second user, or
• In response to determining that the identifier is not stored in the storage medium (110), rejecting the request of the first user.

9. The telecommunication method of any of the preceding claims, wherein a second asymmetric key pair is assigned to the first user, wherein the method further comprises signing the second dataset by the telecommunication device of the first user (104) using the private key of the second asymmetric key pair, wherein the telecommunication device of the second user (106) in response to receiving the second dataset verifies the signature of the second dataset using the public key of the second asymmetric key pair, wherein the telecommunication device of the second user (106) rejects the second dataset if the signature cannot be verified.

10. The telecommunication method of any of claims 4-9, wherein the storage medium (110) comprises storage areas, each storage area being assigned to an individual user, wherein each storage area is associated with a public key of the assigned user and/or an identifier of the assigned user and/or an identifier of a user invited to register with the management entity (102), the method further comprising
• In response to creating the first dataset by the telecommunication device of the first user (104), encrypting the symmetric key using the public key of the second asymmetric key pair,
• Transmitting the encrypted symmetric key to the management entity (102), and
• Storing the encrypted asymmetric key in the storage area assigned to the first user.

11. The telecommunication method of claim 10, wherein the reception of the public key of the second user by a telecommunication device of the first user (104) automatically triggers the telecommunication device of the first user (104) to:
• Retrieve the encrypted symmetric key from the management entity (102),
• Decrypt the retrieved encrypted symmetric key using the private key of the second asymmetric key pair,
• Create the second dataset by encrypting the symmetric key using the public key of the first asymmetric key pair, and
• Forward the second dataset to the telecommunication device of the second user (106).

## Amended claims

### Amended claims in accordance with Rule 137(2) EPC.

1. A secure telecommunication method for communicating information in an e-mail between a telecommunication device of a first user (104) and a telecommunication device of a second user (106), the method comprising:
• Determining by the first user whether a public key of a first asymmetric key pair for encrypted e-mail exchange is assigned to the second user,
• In response to determining, that no public key is assigned to the second user, creating a first dataset by encrypting the information by the telecommunication device of the first user (104) using a symmetric key,
• Transferring the first dataset to the second user using the e-mail, and storing the first dataset with the telecommunication device of the second user (106),
• In response to receiving the first dataset by the telecommunication device of the second user (106), creating the first asymmetric key pair comprising the public key and a private key,
• Providing the public key of the first asymmetric key pair to a telecommunication device of the first user (104),
• Creating a second dataset by encrypting the symmetric key by a telecommunication device of the first user (104) using the public key of the first asymmetric key pair,
• Transferring the second dataset to the second user,
• Decrypting the second dataset using the private key of the first asymmetric key pair by the telecommunication device of the second user (106), the decryption resulting in the symmetric key,
• Retrieving the first dataset and decrypting the first dataset using the symmetric key by the telecommunication device of the second user (106).

2. The telecommunication method of claim 1, wherein the symmetric key is a random key.

3. The telecommunication method of claim 1 or 2, wherein the second dataset is transferred to the second user via e-mail using the same e-mail address previously used for transferring the first dataset to the second user.

4. The telecommunication method of any of the preceding claims, wherein the e-mail used for transferring the first dataset further comprises a pointer in plain text, the pointer indicating that the second user requires an asymmetric key pair in order to read the information encrypted in the first dataset, the pointer comprising a web-address of a management entity (102) the e-mail further comprising an invitation to register with the management entity (102).

5. The telecommunication method of claim 4, wherein the management entity (102) comprises a storage medium (110), wherein in response to determining that no public key is assigned to the second user, the method further comprises at the management entity (102):
• Receiving a first identifier of the second user from the first user,
• Receiving a registration request from the second user, the registration request comprising a second identifier of the second user,
• Comparing the first identifier of the second user received from the first user with the second identifier of the second user received from the second user,
• In response to determining that the first identifier of the second user received from the first user is identical with the second identifier of the second user received from the second user, determining the public key of the second user, forwarding the public key of the second user to the first user and storing the public key associated with the identifier of the second user in the storage medium (110).

6. The telecommunication method of claim 5, wherein the identifier of the second user comprises the e-mail address of the second user the e-mail comprising the first dataset has been sent to.

7. The telecommunication method of claim 5 or 6, wherein, in order to determine whether a public key is assigned to the second user, the first user queries the management entity (102) to provide the public key of the second user, wherein in response to receiving a query to provide the public key of the second user, the management entity (102) determines whether the public key of the second user is stored in the storage medium (110) and if the public key of the second user is stored in the storage medium (110), retrieves the public key of the second user from the storage medium (110)and forwards the public key of the second user to the first user.

8. The telecommunication method of claim 7, wherein upon receiving a request to provide the public key of the second user from the first user, the method further comprises at the management entity (102):
• Requesting the first user to provide an identifier,
• In response to receiving the identifier from the first user, determining whether the identifier of the first user is stored in the storage medium (110),
• In response to determining that the identifier is stored in the storage medium (110) providing the first user with the public key of the second user, or
• In response to determining that the identifier is not stored in the storage medium (110), rejecting the request of the first user.

9. The telecommunication method of any of the preceding claims, wherein a second asymmetric key pair is assigned to the first user, wherein the method further comprises signing the second dataset by the telecommunication device of the first user (104) using the private key of the second asymmetric key pair, wherein the telecommunication device of the second user (106) in response to receiving the second dataset verifies the signature of the second dataset using the public key of the second asymmetric key pair, wherein the telecommunication device of the second user (106) rejects the second dataset if the signature cannot be verified.

10. The telecommunication method of any of claims 4-9, wherein the storage medium (110) comprises storage areas, each storage area being assigned to an individual user, wherein each storage area is associated with a public key of the assigned user and/or an identifier of the assigned user and/or an identifier of a user invited to register with the management entity (102), the method further comprising
• In response to creating the first dataset by the telecommunication device of the first user (104), encrypting the symmetric key using the public key of the second asymmetric key pair,
• Transmitting the encrypted symmetric key to the management entity (102), and
• Storing the encrypted symmetric key in the storage area assigned to the first user.

11. The telecommunication method of claim 10, wherein the reception of the public key of the second user by a telecommunication device of the first user (104) automatically triggers the telecommunication device of the first user (104) to:
• Retrieve the encrypted symmetric key from the management entity (102),
• Decrypt the retrieved encrypted symmetric key using the private key of the second asymmetric key pair,
• Create the second dataset by encrypting the symmetric key using the public key of the first asymmetric key pair, and
• Forward the second dataset to the telecommunication device of the second user (106).
